# EUROPÄISCHE PATENTSCHRIFT

(11) **EP 3 652 450 B1**
(45) Veröffentlichungstag und Bekanntmachung des Hinweises auf die Patenterteilung: **27.03.2024**
(21) Anmeldenummer: 18740786.1
(22) Anmeldetag: 11.07.2018
(51) Int. Cl.: F16B 21/07, B60R 13/02, F16B 21/18, F16B 5/06

(54) **VERBINDER, SYSTEM AUS EINEM VERBINDER UND EINEM EINEN KOPF AUFWEISENDEN RASTSTIFT EINES ZWEITEN BAUTEILS, VERFAHREN UNTER EINSATZ EINES DERARTIGEN SYSTEMS**
CONNECTOR, SYSTEM CONSISTING OF A CONNECTOR AND A LATCHING PIN OF A SECOND COMPONENT, SAID LATCHING PIN HAVING A HEAD, AND METHOD FOR USING SUCH A SYSTEM
CONNECTEUR, SYSTÈME COMPOSÉ D'UN CONNECTEUR ET D'UNE TIGE D'ENCLIQUETAGE CONTENANT UNE TÊTE D'UN DEUXIÈME COMPOSANT, PROCÉDÉ UTILISANT UN TEL SYSTÈME

(30) Priorität: 14.07.2017 DE 102017006675
(43) Veröffentlichungstag der Anmeldung: 20.05.2020
(73) Patentinhaber: A Raymond Et Cie, 38000 Grenoble (FR)
(72) Erfinder: REGENSBURGER, Jan, 79400 Kandern (DE); SCHWENK, Mathias, 79331 Teningen (DE)
(74) Vertreter: König Szynka Tilmann von Renesse Patentanwälte Partnerschaft mbB Düsseldorf
(86) Internationale Anmeldenummer: PCT/EP2018/068776
(87) Internationale Veröffentlichungsnummer: WO 2019/011978

(56) Entgegenhaltungen:
- EP-A1- 1 813 826
- WO-A1-2013/064255
- DE-A1-102014 103 535
- DE-T2- 69 004 890

## Beschreibung

Die Erfindung betrifft einen Verbinder zum Verbinden eines ersten Bauteils an einem einen Kopf aufweisenden Raststift eines zweiten Bauteils. Ferner betrifft die Erfindung ein zugeordnetes System aus einem Verbinder und einem einen Kopf aufweisenden Raststift eines zweiten Bauteils. Ferner betrifft die Erfindung ein Verfahren unter Einsatz eines derartigen Systems.

Aus US 2008 284 165 (A1) ist eine Kupplung bekannt, welche die kugelförmigen Enden zweier Kanäle für Fluide beweglich miteinander verbinden kann. Ein zylinderförmiger Grundkörper weist hierzu einen ebenfalls zylinderförmigen Aufnahmeraum auf, in der die kugelförmigen Enden einrasten können. Über ebenfalls zylinderförmige Einsätze mit einem Gewinde kann an beiden Seiten des Grundkörpers sowohl die Arretierung als auch die Haltekraft eingestellt werden. Nachteilig an dieser Kupplung ist, dass die Haltekraft statisch und manuell eingestellt wird und bei einer hohen erforderlichen Dichtigkeit oder Stabilität der Verbindung typischerweise eine hohe permanente Haltekraft erforderlich ist, wodurch unter anderem die Beweglichkeit verringert wird. Ferner ist die Montage relativ aufwendig.

Aus EP 1 740 876 B1 ist eine Kupplung für ein Fluidleitungssystem bekannt, welche ein Kupplungselement aufweist, in das ein Einführelement eines Gegenstückes einsteckbar ist. Ferner weist die Kupplung ein C-förmiges Verriegelungsteil auf, welches um die Längsachse der Kupplung an dem Kupplungsteil angebracht ist. Über kreissegmentartige und/oder konische Abschnitte am jeweiligen Ende des Verriegelungsteils wird eine Arretierung in einer Arretierungsstellung erreicht, mit der das Verriegelungsteil an einem Grundkörper des Kupplungselements arretiert wird. An dem Einführelement des Gegenstückes ist in Form einer ringförmigen, ebenen Fläche eine Komplementärstruktur zum Verriegeln des Einführelementes mit dem Einführelement ausgebildet, wozu das Einführelement ebenfalls eine ringförmige, ebene Fläche aufweist. Bei einer Drehung um die Längsachse gleiten die Kupplung und die kreissegmentartigen Abschnitte unter Aufbiegen des Verriegelungsteils aus den Vertiefungen heraus und geben das Einführelement frei.

Aus DE 10 2014 103 535 A1 ist eine Vorrichtung zur Befestigung eines Bauteils an einem Trägerbauteil gemäß dem Oberbegriff der Ansprüche 1, 4 und 11 bekannt.

Vor diesem Hintergrund lag der vorliegenden Erfindung die Aufgabe zugrunde, einen verbesserten Verbinder zum Verbinden eines ersten Bauteils an einem einen Kopf aufweisenden Raststift eines zweiten Bauteils vorzuschlagen, der insbesondere verbesserte Haltekräfte und/oder eine verbesserte Halterung und/oder Verrastung gegen unabsichtliches Lösen der Verbindung ermöglicht.

Diese Aufgabe wird durch den Verbinder gemäß Anspruch 1 oder 4 oder 11, das System gemäß Anspruch 13 und das Verfahren gemäß Anspruch 15 sowie die Verwendung gemäß Anspruch 16 gelöst. Vorteilhafte Ausführungsformen sind in den Unteransprüchen und der hiernach folgenden Beschreibung wiedergegeben.

Die Erfindung geht von dem Grundgedanken aus, bei einem Verbinder, der einen Grundkörper mit einem Aufnahmeraum zur Aufnahme des Kopfes und eine von dem Grundkörper gehaltene, mit einem Vorsprung in den Aufnahmeraum ragende Haltefeder aufweist, eine Relativbewegung zwischen der Haltefeder und dem Grundkörper von einer Halteposition, in der insbesondere bevorzugt ein Lösen der Haltefeder möglich ist, in Richtung auf eine Verriegelungsposition zuzulassen und mit dieser Bewegung Teile des Grundkörpers und Teile der Haltefeder in eine solche Relativlage zu bringen, dass ein Lösen der Haltefeder, insbesondere ein Spreizen der Haltefeder blockiert wird. Die Erfindung macht sich dabei die Erkenntnis zu Nutze, dass ein gutes Halten des Raststifts insbesondere dann notwendig ist, wenn auf den Grundkörper eine Kraft aufgewendet wird, die den Grundkörper von dem Raststift wegzieht. Hier hat die Erfindung erkannt, dass man diese Kraft nutzen kann, um eine Relativbewegung zwischen der Haltefeder und dem Grundkörper herbeizuführen, die das Lösen der Haltefeder blockiert

Der erfindungsgemäße Verbinder ist zum Verbinden eines ersten Bauteils an einem Kopf aufweisenden Raststift eines zweiten Bauteils vorgesehen. Der Verbinder kann ein einzelnes Bauteil sein und neben der durch den Aufnahmeraum und die Haltefeder geschaffenen Möglichkeit zur Verbindung mit dem zweiten Bauteil Verbindungselement zum Verbinden des Verbinders mit dem ersten Bauteil aufweisen, wie beispielsweise Haken, Ösen, Teile einer Rast- oder Klettverbindung. Es ist auch denkbar, dass der Verbinder selbst wieder einen einen Kopf aufweisenden Raststift aufweist, an den das erste Element angebracht wird. Ebenso kann der Verbinder ein einstückiges Teil des ersten Elements sein und beispielsweise mit diesem in Teilen urgeformt werden, beispielsweise dadurch, dass der Grundkörper des Verbinders als Teil eines größeren Spritzgußteils hergestellt wird. Ebenso kann der Verbinder Oberflächen aufweisen, an die das erste Bauteil durch Fügeverfahren, insbesondere durch Schweißen Löten oder Kleben befestigt werden kann.

Der erfindungsgemäße Verbinder weist einen Grundkörper auf. Der Grundkörper stellt den Aufnahmeraum zur Aufnahme des Kopfes bereit. Um das Einführen des Kopfes in den Aufnahmeraum zu ermöglichen, weist der Grundkörper insbesondere bevorzugt eine Öffnung auf, durch die der Kopf des Raststift von außen in den Aufnahmeraum geschoben werden kann. Die Richtung, in der der Kopf von außen in den Aufnahmeraum geschoben werden kann, wird als Einschubsrichtung verstanden. Bei einer in dem Grundkörper vorgesehenen Öffnung, durch die der Kopf des Raststift von außen in den Aufnahmeraum geschoben werden kann, ist die Einschubsrichtung die Richtung, die senkrecht auf die Fläche der Öffnung steht, wobei als Fläche der Öffnung die Fläche verstanden wird, die von den die Öffnung begrenzenden Rändern begrenzt wird. Als Einschubsrichtung kann, insbesondere wenn sich bei komplex ausgeführten Öffnungen die Fläche der Öffnung nicht eindeutig bestimmen lässt, auch die Richtung verstanden werden, die den Mittelpunkt der Öffnung mit dem Mittelpunkt des Aufnahmeraums verbindet. Alternativ zu dem Vorsehen einer solchen Öffnung sind Ausführungsformen denkbar, bei denen einen Einschubkanal vorgesehen ist, an dessen Grund der Aufnahmeraum ausgebildet ist, und durch den der Kopf seitlich von außen in den Aufnahmeraum geschoben werden kann.

Der Grundkörper dient ferner der Halterung der Haltefeder. Hierzu kann er beispielsweise Stützflächen aufweisen, auf denen sich Teile der Haltefeder abstützen. Dabei ist die Halterung der Haltefeder durch den Grundköper so ausgeführt, dass die Haltefeder eine erste Position, im nachfolgenden Halteposition genannt, einnehmen kann und der Grundkörper, wenn sich die Haltefeder in der Halteposition befindet, relativ zu der Haltefeder entlang einer Verriegelungsrichtung bewegt werden kann, wobei die Haltefeder bei einer solchen Bewegung des Grundkörpers in die Verriegelungsrichtung aus der Halteposition in eine als Verriegelungsposition bezeichnete Relativlage relativ zum Grundkörper überführt wird.

In einer bevorzugten Ausführungsform verläuft die Einschubsrichtung nicht senkrecht zur Verriegelungsrichtung. Insbesondere bevorzugt verläuft die Einschubsrichtung in einem Winkel von 0° bis <90°, insbesondere von 0° bis <60°, insbesondere bevorzugt von 0° bis <30° zur Verriegelungsrichtung. Insbesondere bevorzugt verläuft die Einschubsrichtung in Richtung der zur Verriegelungsrichtung.

In einer bevorzugten Ausführungsform verläuft die Löserichtung nicht in Richtung der Verriegelungsrichtung. Insbesondere bevorzugt verläuft die Löserichtung in einem Winkel von >0° bis 90°, insbesondere von >30° bis 90°, insbesondere bevorzugt von >60° bis 90° zur Verriegelungsrichtung. Insbesondere bevorzugt verläuft die Löserichtung senkrecht zur Verriegelungsrichtung.

In einer bevorzugten Ausführungsform verläuft die Löserichtung nicht in Richtung der Einschubsrichtung. Insbesondere bevorzugt verläuft die Löserichtung in einem Winkel von >0° bis 90°, insbesondere von >30° bis 90°, insbesondere bevorzugt von >60° bis 90° zur Einschubsrichtung. Insbesondere bevorzugt verläuft die Löserichtung senkrecht zur Einschubsrichtung.

Über die Bereitstellung des Aufnahmeraums sowie des Zugangs für den Kopf zum Aufnahmeraum und die Halterung der Haltefeder hinaus kann der Grundkörper beliebig ausgeführt sein. Häufig wird er Angriffsflächen aufweisen, die ein Ergreifen des Grundkörpers und ein Aufsetzen, bzw. Aufschieben des Grundkörpers auf den Raststift durch den Benutzer vereinfachen. In bevorzugten Ausführungsform ist der Grundkörper würfelförmig, kugelförmig, ellipsoid oder ein Polyeder.

Der Aufnahmeraum kann zylinderförmig oder konisch ausgestaltet sein oder eine Struktur aufweisen, welche komplementär zu dem Raststift oder seinem Kopf ist. Der Aufnahmeraum kann würfelförmig, kugelförmig, ellipsoid oder ein Polyeder sein. Aber auch andere geometrische oder freigeformte Formen können verwendet werden. Der Aufnahmeraum des Grundkörpers muss nicht notwendigerweise komplementär zum Raststift ausgestaltet sein. Der Grundkörper kann aus Kunststoff, Metall oder einem Verbundwerkstoffe hergestellt sein.

Unter einer Haltefeder wird ein Element des Verbinders verstanden, welches von dem Grundkörper gehalten wird und aus einer Vorzugslage unter Spannen des Elements bewegt werden kann. Die Haltefeder kann ein Lösen des Verbinders vom Raststift verhindern. Die Haltefeder kann den Grundkörper zumindest teilweise umgeben. Die Haltefeder kann klammerartig ausgeführt sein. Die Haltefeder kann auch gänzlich innerhalb des Grundkörpers angeordnet sein. Besonders bevorzugt weist die Haltefeder die Form eines eckigen oder runden Ringes auf, welcher vorzugsweise an einer oder sogar mehreren Stellen unterbrochen ist. Insbesondere bevorzugt weist die Haltefeder eine C-förmige Gestalt auf, insbesondere bezüglich des Querschnittes. Denkbar ist auch ein komplex geformter Ring mit einer oder mehreren Ausnehmungen und Unterbrechungen. Die Haltefeder kann ein Element sein, welches einen Vorsprung aufweist, der einen Rücksprung des Raststiftes hintergreifen kann. Auch kann die Haltefeder ein Element sein, welches einen Vorsprung aufweist, der einen Rücksprung des Grundkörpers hintergreift. Die Haltefeder kann aus einem elastischen Material, insbesondere Kunststoff oder Metall oder einem Verbundmaterial gefertigt sein.

Unter einer Halteposition wird - zur Abgrenzung von der Verriegelungsposition - eine erste Relativlage der Haltefeder relativ zum Grundkörper verstanden, in der ein Vorsprung der Haltefeder in den Aufnahmeraum ragt. Die Halteposition unterscheidet sich von der Verrieglungsposition insbesondere dadurch, dass der Vorsprung in der Halteposition in eine Löserichtung bewegt werden kann und nach einer Bewegung von der Halteposition in die Löserichtung weniger weit in den Aufnahmeraum ragt als in der Halteposition. Dabei spannt ein Bewegen des Vorsprungs von der Halteposition in die Löserichtung die Haltefeder. Da in der Halteposition der Vorsprung in den Aufnahmeraum ragt, ist die Halteposition grundsätzlich dazu geeignet, ein Halten des Kopfes in dem Aufnahmeraum zu ermöglichen, nämlich wenn der in den Aufnahmeraum ragende Vorsprung den Kopf auf der Seite hintergreift, in deren Richtung der Kopf bewegt werden müsste, um aus dem Aufnahmeraum bewegt zu werden.

Als Verriegelungsposition wird die Relativlage der Haltefeder zum Grundkörper bezeichnet, in die die Haltefeder bei einer Bewegung des Grundkörpers aus der Halteposition in eine Verriegelungsrichtung überführt wird.

Erfindungsgemäß ist es nunmehr vorgesehen, dass der Grundkörper einen innenliegenden Kontaktpunkt oder eine innenliegende Kontaktfläche aufweist und die Haltefeder eine Gegenfläche aufweist, wobei in der Verriegelungsposition der innenliegende Kontaktpunkt, bzw. die innenliegende Kontaktfläche in Kontakt mit der Gegenfläche der Haltefeder ist oder in der Verriegelungsposition der innenliegende Kontaktpunkt, bzw. die innenliegende Kontaktfläche in Kontakt mit der Gegenfläche der Haltefeder kommt, wenn der Vorsprung in der Verriegelungsposition in Löserichtung bewegt wird. Alternativ ist vorgesehen, dass die Haltefeder einen außenliegenden Kontaktpunkt oder eine außenliegende Kontaktfläche aufweist und der Grundkörper eine Gegenfläche aufweist, wobei in der Verriegelungsposition der außenliegende Kontaktpunkt, bzw. die außenliegende Kontaktfläche in Kontakt mit der Gegenfläche des Grundkörpers ist oder in der Verriegelungsposition der außenliegende Kontaktpunkt, bzw. die außenliegende Kontaktfläche in Kontakt mit der Gegenfläche des Grundkörpers kommt, wenn der Vorsprung in der Verriegelungsposition in Löserichtung bewegt wird. Der Kontakt des Kontaktpunkts, bzw. der Kontaktfläche mit der Gegenfläche verhindert ein weiteres Bewegen des Vorsprungs in die Löserichtung und verhindert somit ein Lösen der Haltefeder. Damit stellt die Erfindung sicher, dass immer dann, wenn eine Kraft auf den Grundkörper wirkt, die bei in der Halteposition befindlicher Haltefeder den Grundkörper in die Verriegelungsposition überführt, ein besonders sicheres Halten des Kopfes im Aufnahmeraum und insbesondere kein ungewolltes Lösen der Haltefeder erfolgt.

Die Erfindung hat erkannt, dass für eine Blockade das Zusammenwirken zweier Flächen geeignet ist, also beispielsweise einer innenliegenden Kontaktfläche an dem Grundkörper mit einer Gegenfläche an der Haltefeder oder einer außenliegenden Kontaktfläche an der Haltefeder mit einer Gegenfläche an dem Grundkörper. Die Erfindung hat jedoch auch erkannt, dass eine Blockade bereits durch das Zusammenwirken eines Kontaktpunktes mit einer Gegenfläche erreicht werden kann. Der Kontaktpunkt kann die Spitze eines Vorsprungs sein. Der Kontaktpunkt kann auf einer Kante liegen. Der Kontaktpunkt kann auf einer Rippe liegen. Beispielsweise kann ein Zusammenwirken eines innenliegenden Kontaktpunkts an dem Grundkörper mit einer Gegenfläche an der Haltefeder oder eines außenliegenden Kontaktpunkts an der Haltefeder mit einer Gegenfläche an dem Grundkörper vorgesehen sein.

In einer bevorzugten Ausführungsform ist der Kontaktpunkt, bzw. die Kontaktfläche in der Halteposition mit der Gegenfläche, die in dieser Ausführungsform im Winkel zur Verriegelungsrichtung steht, in Kontakt und der in Kontakt mit der Gegenfläche befindliche Kontaktpunkt, bzw. die in Kontakt mit der Gegenfläche befindliche Kontaktfläche gleitet entlang der Gegenfläche, wenn der Grundkörper in Richtung der Verriegelungsrichtung bewegt wird. Dieses Gleiten kann dazu genutzt werden, den Vorsprung der Haltefeder weiter in den Aufnahmeraum zu schieben, oder das Material, aus dem der Vorsprung besteht, zu stauchen und damit eine höhere Anpresskraft des Vorsprungs an den Kopf zu bewirken. Insbesondere bevorzugt steht die Gegenfläche in einem Winkel von >5°, insbesondere bevorzugt von >10°, insbesondere bevorzugt von >20°, insbesondere bevorzugt von >30°, insbesondere bevorzugt von >40°, insbesondere bevorzugt von >45°, insbesondere bevorzugt von >50°, insbesondere bevorzugt von >60°, insbesondere bevorzugt von >70° zur Verriegelungsrichtung.

In einer bevorzugten Ausführungsform ist der Kontaktpunkt, bzw. die Kontaktfläche beabstandet zu der Gegenfläche die in dieser Ausführungsform im Winkel zur Verriegelungsrichtung steht, angeordnet, kommt aber in Kontakt mit der Gegenfläche, wenn der Grundkörper bei in der Halteposition befindlichen Haltefeder in die Verriegelungsrichtung bewegt wird. Der in Kontakt mit der Gegenfläche befindliche Kontaktpunkt, bzw. die in Kontakt mit der Gegenfläche befindliche Kontaktfläche gleitet entlang der Gegenfläche, wenn der Grundkörper in Richtung der Verriegelungsrichtung bewegt wird. Dieses Gleiten kann dazu genutzt werden, den Vorsprung der Haltefeder weiter in den Aufnahmeraum zu schieben, oder das Material, aus dem der Vorsprung besteht, zu stauchen und damit eine höhere Anpresskraft des Vorsprungs an den Kopf zu bewirken. Insbesondere bevorzugt steht die Gegenfläche in einem Winkel von >5°, insbesondere bevorzugt von >10°, insbesondere bevorzugt von >20°, insbesondere bevorzugt von >30°, insbesondere bevorzugt von >40°, insbesondere bevorzugt von >45°, insbesondere bevorzugt von >50°, insbesondere bevorzugt von >60°, insbesondere bevorzugt von >70° zur Verriegelungsrichtung.

In einer weiteren Ausführungsform weist die Haltefeder einen zweiten Vorsprung auf, der in der Halteposition in den Aufnahmeraum ragt und der dem ersten Vorsprung gegenüberliegend angeordnet ist. Denkbar sind auch mehr als zwei Vorsprünge, welche insbesondere auf einem Ring um die Längsachse, vorzugsweise in äquidistanten Winkeln, angeordnet sind. Die Vorsprünge können durch jeweils separate Ausnehmungen in dem Grundkörper in den Aufnahmeraum hineinragen und insbesondere verschiedene Geometrien aufweisen, welche vorzugsweise unterschiedliche Haltecharakteristiken aufweisen. Es ist nicht notwendigerweise erforderlich, dass alle Vorsprünge bei dem Einführen des Raststiftes in den Aufnahmeraum sich aus dem Aufnahmeraum heraus bewegen. Denkbar ist eine Verteilung von unterschiedlichen Halte-, Verriegelungs- und in Einrastcharakteristiken. Im Speziellen können die Vorsprünge, vorzugsweise im Wesentlichen gleichzeitig, unter Spreizen der Haltefeder aus dem Aufnahmeraum heraus bewegt werden.

In einer weiteren Ausführungsform können der zweite Vorsprung und der erste Vorsprung vorzugsweise unter Spreizen der Haltefeder voneinander fort bewegt werden.

In einer weiteren Ausführungsform durchgreift der Vorsprung ein in dem Grundkörper vorgesehenes Fenster. Das Fenster kann die Gestalt einer Ausnehmung annehmen, welche eine seitliche Öffnung von außen in den Aufnahmeraum des Verbinders darstellt. Das Fenster kann eine rechteckige, aber auch eine rundliche oder freigeformte Querschnittsform aufweisen. Vorzugsweise weist der Verbinder für jeden Vorsprung der Haltefeder ein zugeordnetes Fenster auf. Denkbar sind auch größere Fenster, welche mehr als einen Vorsprung aufnehmen können. Die Ränder des Fensters können insbesondere abgerundet sein oder schräge Flächen aufweisen, mit denen die Haltekraft und/oder die Verriegelungsfunktion beeinflusst werden können. Die Größe des Fensters ist typischerweise derart dimensioniert, dass der Freiraum oder die Bewegungsfreiheitsgrade der Haltefeder lediglich auf ein im Wesentlichen notwendiges Maß eingegrenzt werden. Insbesondere ist die Größe des Fensters derart, dass ein Herausfallen der Haltefeder aus dem Grundkörper vermieden wird.

In einer bevorzugten Ausführungsform weist der Vorsprung einen dem Inneren des Aufnahmeraums zugewandten konkaven Oberflächenabschnitt auf oder einen dem Inneren des Aufnahmeraums zugewandte, im Winkel von >0° und <90°, vorzugsweise von >0° bis <80°, vorzugsweise von >0° und <70° zur Verriegelungsrichtung verlaufenden, ebenen Oberflächenabschnitt auf. Denkbar sind auch konvexe Oberflächenabschnitte an dem Vorsprung, beispielsweise um Reibung mit dem Raststift zu verringern und/oder die Dichtigkeit insbesondere mit Dichtmitteln zu erhöhen.

Der dem Inneren des Aufnahmeraums zugewandte Oberflächenabschnitt der Haltefeder geht über eine Kante in einen ebenen Oberflächenabschnitt über, der senkrecht zur Verriegelungsrichtung verläuft und als Anschlagfläche genutzt wird, die in Anlage zu einer Anschlagfläche des Grundkörpers gebracht werden kann, um die Bewegung der Haltefeder zu begrenzen, beispielsweise um zu verhindern, dass der Grundkörper, wenn sich die Haltefeder in der Halteposition befindet, in die entgegengesetzte Richtung zu Verriegelungsrichtung bewegt werden kann. Insbesondere bevorzugt wird die Anschlagfläche des Grundkörpers durch eine Fläche gebildet, die ein Fenster im Grundkörper begrenzt, durch das der Vorsprung der Haltefeder in das Innere des Aufnahmeraums ragt.

Gemäß einem weiteren Aspekt der Erfindung wird ein Verbinder zum Verbinden eines ersten Bauteils an einem einen Kopf aufweisenden Raststift eines zweiten Bauteils vorgeschlagen, der einen Grundkörper mit einem Aufnahmeraum zur Aufnahme des Kopfes aufweist, wobei der Grundkörper eine das Äußere des Grundkörpers mit dem Aufnahmeraum verbindende Öffnung aufweist, durch die der Kopf von außerhalb des Grundkörpers entlang einer Einschubrichtung in den Grundkörper geschoben werden kann. Ferner weist der Verbinder eine von dem Grundkörper gehaltene Haltefeder aufweist, die eine als Halteposition bezeichnete Relativlage relativ zum Grundkörper hat und in dieser Halteposition einen in den Aufnahmeraum ragenden Vorsprung aufweist. Gemäß diesem weiteren Aspekt der Erfindung weist der Vorsprung einen dem Inneren des Aufnahmeraums zugewandten konkaven Oberflächenabschnitt aufweist oder einen dem Inneren des Aufnahmeraums zugewandte, im Winkel von >0° und <90°, von >0° bis <80°, vorzugsweise von >0° und <70° zur Einschubrichtung verlaufende ebenen Oberflächenabschnitt aufweist.

In einer bevorzugten Ausführungsform weist die Haltefeder eine Führungsfläche auf, die, wenn sich die Haltefeder in der Halteposition befindet sich, entweder in Anlage mit einer Führungsfläche des Grundkörpers befindet oder in Anlage mit einer Führungsfläche des Grundkörpers kommt, wenn der Grundkörper bei in der Halteposition befindlichen Haltefeder in die Verriegelungsrichtung bewegt wird, wobei die Führungsfläche der Haltefeder und/oder die Führungsfläche des Grundkörpers jeweils in Ebenen liegen, die die Verriegelungsrichtung enthält, bzw. parallel zur Verriegelungsrichtung verläuft. Durch das Zusammenwirken dieser Führungsflächen kann eine saubere Bewegung des Grundkörpers in Verriegelungsrichtung bewirkt werden, selbst wenn die die Bewegung des Grundkörpers relativ zur Haltefeder bewirkenden Kräfte nicht perfekt in Verriegelungsrichtung weisen.

In einer bevorzugten Ausführungsform ist die Kontaktfläche, bzw. der Kontaktpunkt der Haltefeder an einem an der Haltefeder ausgebildeten Stift vorgesehen, der in der Verriegelungsposition in eine Ausnehmung des Grundkörpers, insbesondere bevorzugt ein Loch ragt und die Ausnehmung zum Teil durch die Gegenfläche begrenzt wird. Insbesondere bevorzugt befindet sich der Stift der Haltefeder in der Halteposition außerhalb der Ausnehmung, so dass der Stift erst bei einer Bewegung des Grundkörpers in die Verriegelungsrichtung in die Ausnehmung eingeführt wird.

In einer bevorzugten Ausführungsform weist der Grundkörper eine Abstützfläche auf, mit der er an dem zweiten Bauteil abgestützt werden kann. Die Abstützfläche kann insbesondere Teil einer Dichtlippe oder eines Dichtschirms aus elastischem Material sein, die an dem Grundkörper ausgebildet sind.

In einer bevorzugten Ausführungsform weist der Vorsprung eine von dem Aufnahmeraum nach außen in Richtung auf die Öffnung, durch die der Kopf des Raststifts in den Aufnahmeraum geschoben wird, weisende Schrägfläche auf. Kommt der Kopf mit dieser Schrägfläche in Kontakt, so kann er den Vorsprung in Löserichtung etwas aus dem Aufnahmeraum schieben und somit Raum für das Einführen des Kopfes in den Aufnahmeraum schaffen.

In einer bevorzugten Ausführungsform ist die Gegenfläche oder die Kontaktfläche der Haltefeder an einer Rippe der Haltefeder, insbesondere bevorzugt einer gebogenen Rippe ausgeführt, die von anderen Teilen der Haltefeder vorsteht, insbesondere bevorzugt in eine Richtung entgegengesetzt der Verriegelungsrichtung vorsteht. Insbesondere bevorzugt ist die Rippe an dem Vorsprung ausgeführt.

In einer bevorzugten Ausführungsform ist die Gegenfläche oder die Kontaktfläche der Haltefeder in einer Nut der Haltefeder, insbesondere bevorzugt in einer gebogenen Nut ausgeführt, die in einen anderen Teil der Haltefeder eingebracht ist, insbesondere bevorzugt in Richtung der Verriegelungsrichtung eingebracht ist. Insbesondere bevorzugt ist die Rippe in den Vorsprung eingebracht.

In einer bevorzugten Ausführungsform ist die Gegenfläche oder die Kontaktfläche des Grundkörpers an einer Rippe des Grundkörpers, insbesondere bevorzugt einer gebogenen Rippe ausgeführt, die von anderen Teilen des Grundkörpers vorsteht, insbesondere bevorzugt in eine Richtung der Verriegelungsrichtung vorsteht.

In einer bevorzugten Ausführungsform ist die Gegenfläche oder die Kontaktfläche des Grundkörpers in einer Nut des Grundkörpers, insbesondere bevorzugt in einer gebogenen Nut ausgeführt, die in einen anderen Teil des Grundkörpers eingebracht ist, insbesondere bevorzugt in eine Richtung entgegengesetzt der Verriegelungsrichtung.

In einer bevorzugten Ausführungsform ist der Grundköper und/oder die Haltefeder spiegelsymmetrisch ausgeführt, insbesondere bzgl. einer Ebene, die parallel zur Verriegelungsrichtung verläuft.

Das erfindungsgemäße System weist einen erfindungsgemäßen Verbinder und einen einen Kopf aufweisenden Raststift eines zweiten Bauteils auf.

In einer bevorzugten Ausführungsform ist der Kopf des Raststifts kugelförmig ausgeführt. Der Kopf kann aber auch rechteckig, ellipsoid oder polyederförmig ausgeführt sein.

Der Raststift kann durch den Kopf selbst gebildet sein, ohne dass der Raststift einen den Kopf tragenden Steg aufweist. Beispielsweise kann der Raststift durch das Anbringen einer Kugel auf einer Oberfläche des zweiten Bauteils geschaffen werden. In einer bevorzugten Ausführungsform hat der Raststift einen den Kopf tragenden Steg. In einer besonders bevorzugten Ausführungsform ist der Steg eine Kugel und der Kopf eine Kugel. Der Steg kann aber auch ein Zylinder oder ein Rechteck sein. Es sind Ausführungsformen denkbar, bei denen der Kopf gegenüber einem Steg eine Verdickung darstellt, beispielsweise wenn eine Kugel auf einen zylindrischen Stift aufgesetzt wird. Es sind aber auch Ausführungsformen denkbar, bei denen der Kopf und der Steg eine gleiche Breite/Dicke aufweisen. Der Kopf stellt dann das Ende des Stegs dar und ist insbesondere bevorzugt vom Steg durch eine Ausnehmung, Nut oder Tasche in der Außenoberfläche des Stegs abgesetzt, in die ein Vorsprung der Haltefeder eingreifen kann.

In einer bevorzugten Ausführungsform des Systems weist der Raststift, wenn sich der Kopf in dem Aufnahmeraum des Verbinders befindet, einen dem Vorsprung zugewandten Oberflächenabschnitt auf, der vorzugsweise konvex ausgebildet ist oder der insbesondere im Winkel von >0° und <90° zur Verriegelungsrichtung verläuft.

Weiterhin umfasst die Erfindung ein Verfahren zum Verbinden eines ersten Bauteils an einem einen Kopf aufweisenden Raststift eines zweiten Bauteils, insbesondere mit einem vorbezeichneten System, wobei der Kopf des Raststifts in den Aufnahmeraum des Verbinders bewegt wird.

Ferner umfasst die Erfindung die Verwendung des erfindungsgemäßen Verbinders zum Verbinden eines Halters, z.B. für einen Schlauch an einem Rahmenteil eines Automobils oder zum Verbinden eines Teppichs mit einer Bodenfläche eines Automobils oder zum Verbinden eines Panels, beispielsweise eines Teils eines Armaturenbretts mit einem Rahmenteil eines Automobils, oder zum Befestigen einer Hutablage oder von Verkleidungsteilen, wie z.B. einer Türverkleidung.

Nachfolgend wird die Erfindung anhand von zwei Ausführungsbeispielen der Erfindung näher darstellenden Zeichnungen erläutert. Darin zeigen
- Fig. 1: einen Querschnitt einer ersten Ausführungsform eines erfindungsgemäßen Verbindungssystems mit einem Grundkörper, einer Haltefeder und einem Raststift, wobei sich der Grundkörper in der Verriegelungsposition befindet;
- Fig. 2: das in Fig. 1 mit einem gestrichelten Kreis angedeutete Detail in größerem Maßstab,
- Fig. 3: perspektivische Ansichten von schräg oben von schräg unten auf einen Grundkörper des erfindungsgemäßen Verbinders gemäß Fig. 1;
- Fig. 4: perspektivische Ansichten von schräg oben von schräg unten auf eine Haltefeder des erfindungsgemäßen Verbinders gemäß Fig. 1;
- Fig. 5: eine Abfolge von fünf Querschnitten eines Teils einer weiteren Ausführungsform eines erfindungsgemäßen Verbinders, wobei die Abfolge der Querschnitte die Abfolge der Lagen der Haltefeder relativ zum Grundkörper während des Einbringens des Raststifts und beim Einnehmen der Verriegelungsposition zeigt;
- Fig. 6: die Abfolge von fünf Querschnitten eines Teils der weiteren Ausführungsform des erfindungsgemäßen Verbinders gemäß Fig. 5 unter Hinzunahme des eine Kopf aufweisenden Raststifts, wobei die Abfolge der Querschnitte die Abfolge der Lagen der Haltefeder relativ zum Grundkörper während des Einbringens des Raststifts und beim Einnehmen der Verriegelungsposition zeigt;
- Fig. 7: perspektivische Ansichten von schräg oben von schräg unten auf einen Grundkörper des erfindungsgemäßen Verbinders gemäß Fig. 5 und 6;
- Fig. 8: perspektivische Ansichten von schräg oben von schräg unten auf eine Haltefeder des erfindungsgemäßen Verbinders gemäß Fig. 5 und 6.

Die zwei in den Figuren dargestellten Ausführungsformen eines Verbinders 1 zum Befestigen eines (nicht näher dargestellten) ersten Bauteils an einem zweiten Bauteil weisen einen Grundkörper 4 und eine Haltefeder 6 auf. Ferner weist der Verbinder einen Aufnahmeraum 5 mit einer das Äußere des Grundkörpers 4 mit dem Aufnahmeraum 5 verbindende Öffnung 12 auf, durch die der Kopf 2 eines Raststifts 3 von außerhalb des Grundkörpers 4 in den Grundkörper 4 geschoben und von dem Aufnahmeraum 5 aufgenommen werden kann.

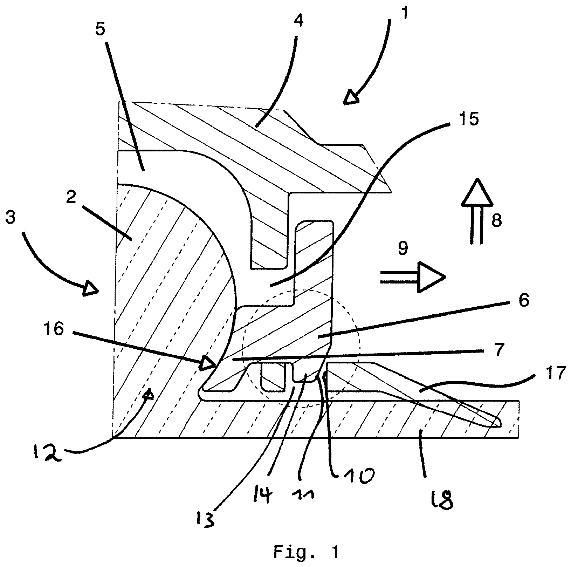

Figur 1 zeigt Teile eines Querschnitts einer ersten Ausführungsform eines erfindungsgemäßen Verbindungssystems mit dem Grundkörper 4, der Haltefeder 6 und dem Raststift 3 in der Verriegelungsposition. Die Ausführungsform ist bezüglich der vertikalen Längsachse symmetrisch aufgebaut, so dass die in Fig. 1 nicht gezeigte linke Hälfte der dargestellten rechten Hälfte entspricht. Der Raststift 3 wurde bereits von unten durch eine Öffnung 12 des Grundkörpers 2 in den Aufnahmeraum 5 eingeführt und der Grundkörper 4 bei in der Halteposition befindlichen Haltefeder 6 durch Bewegen in die Verriegelungsrichtung 8 in die in Fig. 1 dargestellte Verriegelungspostion gebracht.

Die von dem Grundkörper 4 gehaltene Haltefeder 6 hat eine als Halteposition bezeichnete Relativlage relativ zum Grundkörper 4 (in Fig. 1 nicht dargestellt). In dieser Halteposition weist die Haltefeder einen in den Aufnahmeraum 5 ragenden Vorsprung 7 auf. Der Vorsprung 7 kann in der Halteposition in eine Löserichtung 9 bewegt. Nach einer Bewegung von der Halteposition in die Löserichtung 9 ragt der Vorsprung 7 weniger weit in den Aufnahmeraum 5 als in der Halteposition. Ein Bewegen des Vorsprungs 7 von der Halteposition in die Löserichtung 9 spannt die Haltefeder 6. Bezogen auf die in Fig. 1 dargestellte Verriegelungsposition ergibt sich die Halteposition, wenn die Haltefeder 6 in Richtung des Pfeils 8 relativ zum Grundköper 4 bewegt wird, bzw. der Grundkörper entgegen der Verriegelungsrichtung 8 relativ zur Haltefeder 6 bewegt wird.

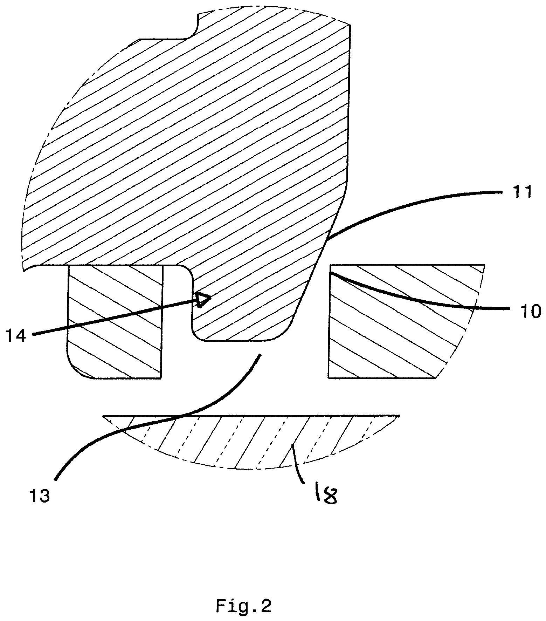

Der Grundkörper 4 weist eine innenliegende Kontaktfläche 10 auf, die eine Ausnehmung 13 begrenzt. Die Haltefeder 6 weist eine an einem Stift 14 ausgebildete Gegenfläche 11 auf. In der in Fig. 1 dargestellten Verriegelungsposition (vgl. auch Fig. 2) ist die innenliegende Kontaktfläche 10 beabstandet zur Gegenfläche 11 der Haltefeder 6 dargestellt, kommt aber ausgehend von der in Fig. 1 dargestellten Verriegelungsposition in Kontakt mit der Gegenfläche 11 der Haltefeder 6, wenn der Vorsprung 7 in der Verriegelungsposition in Löserichtung 9 bewegt wird. Der dann entstehende Kontakt verhindert, dass der Vorsprung 7 weiter in Löserichtung 9 bewegt wird.

Der Grundkörper 4 weist ein Fenster 15 auf, durch das der Vorsprung 7 der Haltefeder 6 in den Aufnahmeraum 5 ragt.

In der in Fig. 1 gezeigten Verriegelungsposition liegt ein dem Inneren des Aufnahmeraums 5 zugewandter konkaver Oberflächenabschnitt 16 an dem kugelförmigen Kopf 2 an.

Fig. 1 zeigt ferner, dass an dem Grundkörper 4 eine Dichtlippe 17 vorgesehen ist. Die Dichtlippe ist in der Darstellungsform der Fig. 1 überlappend mit dem zweiten Bauteil 18 dargestellt, um anzudeuten, dass die Dichtlippe 17 elastisch ist und sich an die Oberfläche des zweiten Bauteils 18 anlegt.

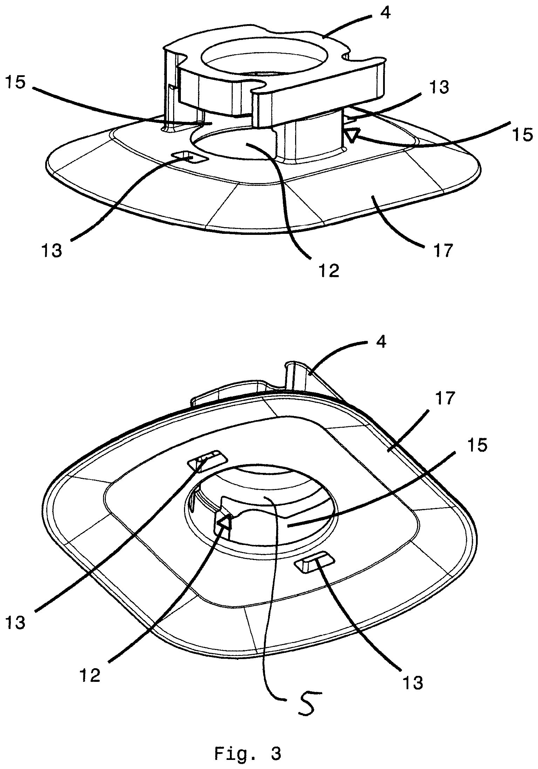

Figur 3 zeigt perspektivische Ansichten von schräg oben und von schräg unten auf den Grundkörper 4 des Verbinder 1 gemäß Fig. 1. In der Ansicht von schräg unten ist der zylindrischer Aufnahmeraum 5 erkennbar sowie seitliche Fenster 15, durch die die Haltefeder 6 in den Aufnahmeraum 5 hineinragen kann. Ferner sind Dichtflächen 17 zum Abstützen an einer Oberfläche des zweiten Bauteils zu erkennen, welche schirmartig um die Öffnung 12 angeordnet sind. Der Grundkörper 4 weist ferner zwei Ausnehmungen 13 für ein Einrasten der Stifte 14 der Haltefeder 6 auf.

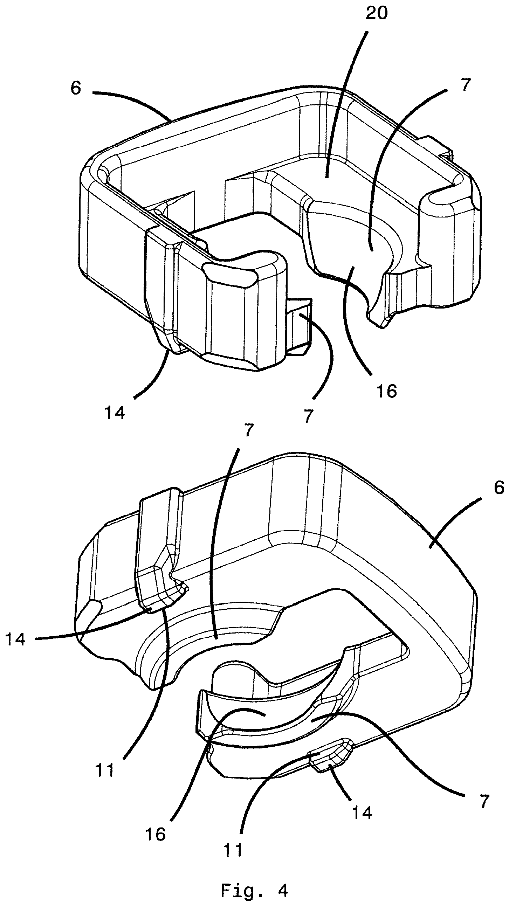

Figur 4 zeigt perspektivische Ansichten von schräg oben und von schräg unten auf eine Haltefeder 6 des Verbinders gemäß Fig. 1. Erkennbar ist die Grundform eines geöffneten Rings der Haltefeder 6, bzw. der klammerartige Aufbau. Ferner sind an den Stiften 14 die Gegenflächen 11 erkennbar.

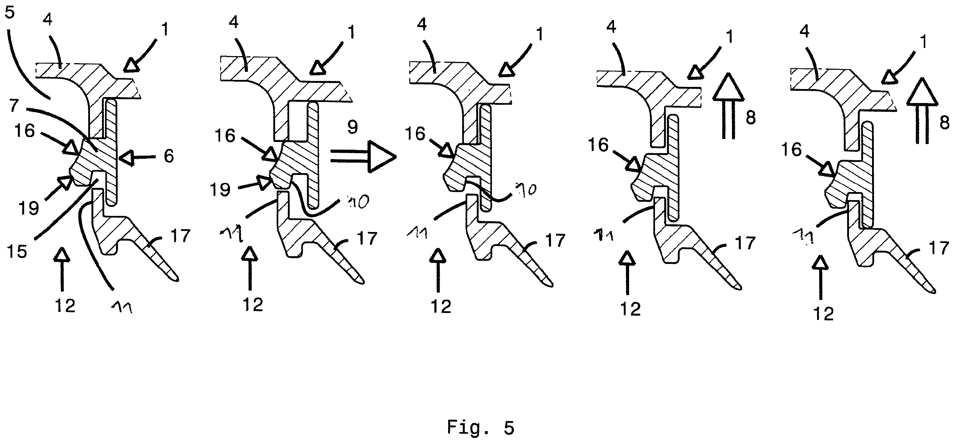

Die Haltefeder 6 weist zwei Vorsprünge 7 auf, welche spiegelsymmetrisch aufgebaut sind und konkave Oberflächenabschnitte 16 zur Anlage an dem kugelförmigen Kopf 1 aufweisen. Auf der Gegenseite der Öffnung des Ringes weist die Haltefeder eine verringerte Materialstärke auf. Hierdurch kann eine erhöhte Elastizität oder eine erhöhte Verformung erzielt werden. Eine relativ breite, rahmenartige Ausführung der Haltefeder 6 ermöglicht eine leichte Montage oder Demontage bzw. ein leichtes Lösen der Verbindung aus der verriegelten Position. Der konkave Oberflächenabschnitt 16 geht über eine Kante in einen ebenen Oberflächenabschnitt 20 über, der auch als Anschlag dienen kann und eine Endlage der Haltefeder 6 innerhalb des Grundkörpers 4 festlegen kann (vergleichbar der in den beiden linken Bildern und der in dem mittleren Bild der Fig. 5 dargestellten Lage).

Figur 5 zeigt eine Abfolge von Teilen eines Querschnitts einer Ausführungsform des erfindungsgemäßen Verbinders 1. Der Raststift 3 und der Kopf 2 des erfindungsgemäßen Systems sind zur Vereinfachung der Darstellung nicht dargestellt. Auch die Ausführungsform gemäß Fig. 5 ist bezüglich der vertikalen Längsachse symmetrisch aufgebaut, so dass die in Fig. 5 jeweils nicht gezeigte linke Hälfte der dargestellten rechten Hälfte entspricht.

Das Bild ganz links in Fig. 5 zeigt den Verbinder mit der Haltefeder 6 in der Halteposition. Zu erkennen ist insbesondere, dass der Vorsprung 7 durch ein Fenster des Grundkörpers 4 in den Aufnahmeraum 5 ragt. Zu erkennen ist ferner, dass die außenliegende Kontaktfläche 10 der Haltefeder 6 nicht mit der Gegenfläche 11 des Grundkörpers 4 in Kontakt kommt, wenn der Vorsprung 7 in Löserichtung 9 bewegt wird. Wie im zweiten Bild von links der Fig. 5 zu sehen, erlaubt dies eine Bewegung des Vorsprungs 7 in Richtung aus dem Aufnahmeraum 5 heraus. Diese Bewegung ist entweder zum Lösen der Haltefeder 6 notwendig oder notwendig, um den Kopf 2 des Raststifts 3 an dem Vorsprung 7 von unten nach oben vorbeizuschieben. Um dieses Einschieben des Kopfes 2 zu erleichtern, weist der Vorsprung 7 eine nach außen weisende Fase 19 auf. Kommt der Kopf 2 mit der Fase 19 während seiner Bewegung von unten nach oben in den Aufnahmeraum 5 in Kontakt, so versucht der Kopf 2 bei weitergehender Bewegung den Vorsprung 7 nach außen zu drücken. Befindet sich die Haltefeder dabei, wie in den beiden linken Bildern und dem mittleren Bild der Fig. 5 in der Halteposition, so gelingt dieses Nach-Außen-Drücken und der Kopf 2 gelangt an dem Vorsprung 7 vorbei in den Aufnahmeraum 5. Hat der Kopf 2 den Vorsprung passiert, federt der Vorsprung 7 wieder nach innen. Dies erfolgt, weil eine Bewegung des Vorsprungs 7 aus dem Aufnahmeraum 5 heraus die Haltefeder 6 spannt. Das Zurückfedern des Vorsprungs 7 ist im Vergleich des zweiten Bild von links mit dem mittleren Bild der Fig. 5 zu erkennen.

In den beiden rechten Bildern der Fig. 5 wird der Grundkörper 2 in die Verriegelungsrichtung 8 in die Verriegelungsposition (ganz rechtes Bild in Fig. 5) bewegt. Während der Bewegung in die Verriegelungsrichtung 8 gelangt die Kontaktfläche 10 in Anlage mit der Gegenfläche 11. Durch diesen Kontakt wird eine Bewegung des Vorsprungs 7 aus dem Aufnahmeraum 5 heraus verhindert.

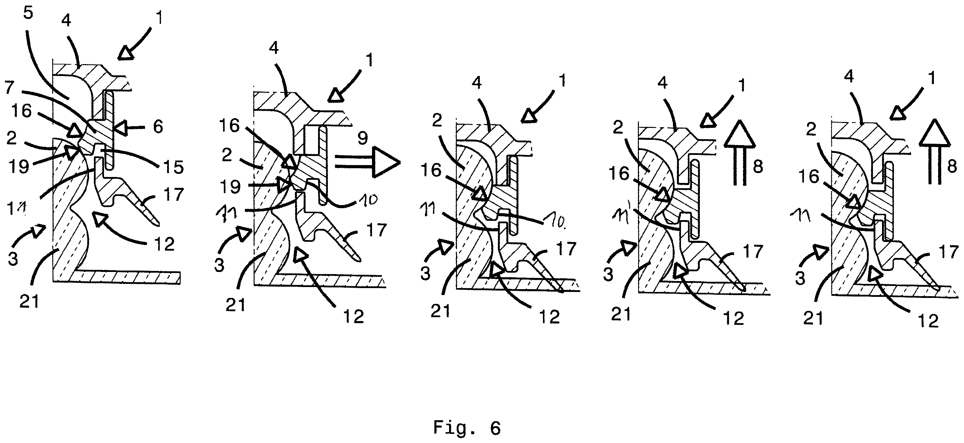

Figur 6 zeigt die Abfolge der Bilder gemäß Fig. 5 unter Hinzunahme eines Raststifts 3, der einen kugelförmigen Kopf 2 und eine kugelförmigen Schaft 21 aufweist.

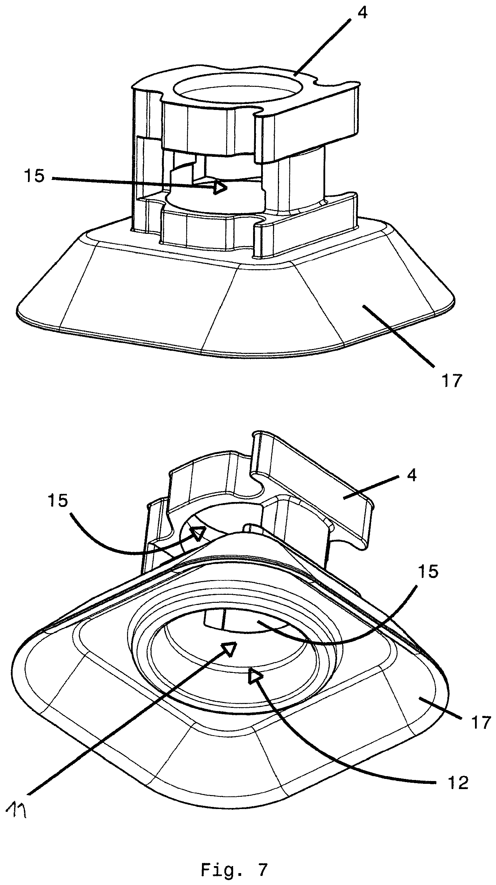

Figur 7 zeigt für die zweite Ausführungsform perspektivische Ansichten von schräg oben und von schräg unten auf den Grundkörper 4 gemäß Fig. 5 und 6. Deutlich zu erkennen sind die größeren Abstandsflächen und die weiter nach oben versetzten Fenster 15 für die Haltefeder 6. Ferner sind Verstärkungen im Bereich der Öffnung an einem Kranz zu erkennen

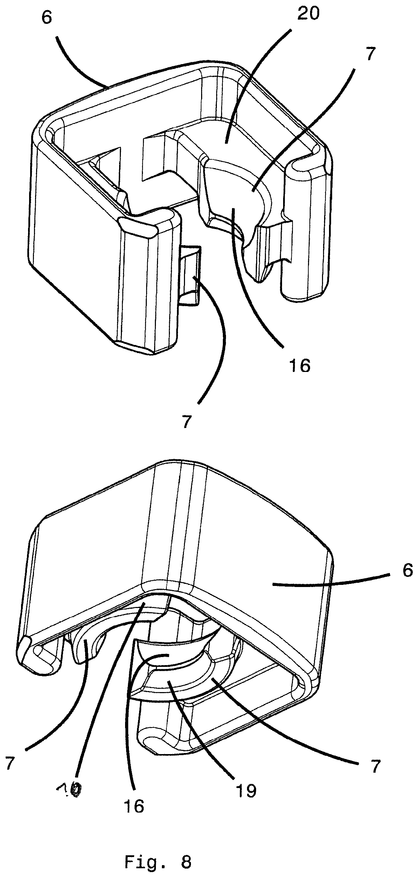

Figur 8 zeigt perspektivische Ansichten von schräg oben und von schräg unten auf eine Haltefeder 6 in der zweiten Ausführungsform gemäß Fig. 5 und 6. Die rahmenartige Grundstruktur des geöffneten Rings ist breiter bzw. dicker als bei der ersten Ausführungsform. Ferner weisen die Vorsprünge 7 ausgeprägtere untere Kontaktflächen auf, welche die Einführung des Raststiftes 3 in den Aufnahmebereich erleichtern können und insbesondere komplementär zur Form der Ausnehmung zwischen den beiden kugelförmigen Abschnitten des Raststiftes 3 ausgebildet sind. Dies ermöglicht weiterhin eine höhere Stabilität des Verbinders 1 in der Halteposition.

Ferner wird durch die unteren schrägen Flächen 19 an den Vorsprüngen 7 ein Spreizen der Haltefeder 6 erleichtert und der Kopf 2 des Raststiftes 3 automatisch zentriert. Auf der Rückseite der Haltefeder 6 wird durch den rahmenartigen Kranz und die beiden nach unten ragenden Vorsprünge 7 eine Sicke oder umlaufende Nut gebildet, in die ein Kranz am Grundkörper 4 eingreifen kann. Dies ermöglicht eine erhöhte Stabilität und eine verbesserte Führung beim Vorgang des Einrastens.

Der Verbinder 1 bzw. der Grundkörper 4 und/oder der Raststift 3 ist vorzugsweise mit einem Bauteil verbunden oder an diesem befestigt. Dies kann im speziellen ein flächenhaftes Element sein, beispielsweise ein Paneel, ein Teppich oder aber auch ein aus Kunststoff, Metall oder einem Verbundmaterial hergestelltes Bauteil sein, welches beispielsweise kraft- oder formschlüssig an dem Verbinder 1 befestigt ist. Das Bauteil an dem Verbinder und das Bauteil an dem Raststift 3 können dabei unterschiedliche Materialien aufweisen, welche thermisch oder klebend schwer zu überwinden sind. Denkbar ist auch eine Anwendung im Bereich der Verlegung von Leitungen, bei der eine schnelle, sichere und reversible Halterung von Kabeln erforderlich ist.

## Patentansprüche

1. Verbinder (1) zum Verbinden eines ersten Bauteils an einem einen Kopf (2) aufweisenden Raststift (3) eines zweiten Bauteils, wobei der Verbinder
• einen Grundkörper (4) mit einem Aufnahmeraum (5) zur Aufnahme des Kopfes (2) aufweist,
• eine von dem Grundkörper (4) gehaltene Haltefeder (6) vorgesehen ist, die eine als Halteposition bezeichnete Relativlage relativ zum Grundkörper (4) hat und die in dieser Halteposition einen in den Aufnahmeraum (5) ragenden Vorsprung (7) aufweist, wobei der Vorsprung (7) in der Halteposition in eine Löserichtung (9) bewegt werden kann und nach einer Bewegung von der Halteposition in die Löserichtung (9) weniger weit in den Aufnahmeraum (5) ragt, als in der Halteposition, wobei ein Bewegen des Vorsprungs (7) von der Halteposition in
die Löserichtung (9) die Haltefeder (6) spannt,
**dadurch gekennzeichnet, dass**
• der Grundkörper (4), wenn sich die Haltefeder (6) in der Halteposition befindet, relativ zu der Haltefeder (6) entlang einer Verriegelungsrichtung (8) bewegt werden kann, wobei die Haltefeder (6) bei einer solchen Bewegung des Grundkörpers (4) in die Verriegelungsrichtung (8) aus der Halteposition in eine als Verriegelungsposition bezeichnete Relativlage relativ zum Grundkörper (4) überführt wird,
und
• der Grundkörper (4) einen innenliegenden Kontaktpunkt (10) oder eine innenliegende Kontaktfläche (10) aufweist und die Haltefeder (6) eine Gegenfläche (11) aufweist, wobei in der Verriegelungsposition der innenliegende Kontaktpunkt (10), bzw. die innenliegende Kontaktfläche (10) in Kontakt mit der Gegenfläche (11) der Haltefeder (6) ist oder in der Verriegelungsposition der innenliegende Kontaktpunkt (10), bzw. die innenliegende Kontaktfläche (10) in Kontakt mit der Gegenfläche (11) der Haltefeder (6) kommt, wenn der Vorsprung (7) in der Verriegelungsposition in Löserichtung (9) bewegt wird, wobei
• ein dem Inneren des Aufnahmeraums (5) zugewandter Oberflächenabschnitt der Haltefeder (6) über eine Kante in einen ebenen Oberflächenabschnitt übergeht, der senkrecht zur Verriegelungsrichtung (8) verläuft und derart ausgestaltet ist, dass er als Anschlagfläche dient, die in Anlage zu einer Anschlagfläche des Grundkörpers (4) gebracht werden kann, um die Bewegung der Haltefeder (6) zu begrenzen.

2. Verbinder nach Anspruch 1, **dadurch gekennzeichnet, dass** die Anschlagfläche des Grundkörpers (4) durch eine Fläche gebildet ist, die ein Fenster im Grundkörper (4) begrenzt, durch das der Vorsprung (7) der Haltefeder (6) in das Innere des Aufnahmeraums (5) ragt.

3. Verbinder nach Anspruch 1 oder 2, **dadurch gekennzeichnet, dass** der innenliegende Kontaktpunkt (10), bzw. die innenliegende Kontaktfläche (10) in der Halteposition mit der Gegenfläche (11) der Haltefeder (6), die im Winkel zur Verriegelungsrichtung (8) steht, in Kontakt ist oder beabstandet zu der Gegenfläche (11) der Haltefeder (6) angeordnet ist, aber in Kontakt mit der Gegenfläche (11) der Haltefeder (6) kommt, wenn der Grundkörper (4) bei in der Halteposition befindlichen Haltefeder (6) in die Verriegelungsrichtung (8) bewegt wird und der in Kontakt mit der Gegenfläche (11) der Haltefeder (6) befindliche Kontaktpunkt (10), bzw. die in Kontakt mit der Gegenfläche (11) der Haltefeder (6) befindliche Kontaktfläche (10) entlang der Gegenfläche (11) gleitet, wenn der Grundkörper (4) in Richtung der Verriegelungsrichtung (8) bewegt wird.

4. Verbinder zum Verbinden eines ersten Bauteils an einem einen Kopf (2) aufweisenden Raststift (3) eines zweiten Bauteils, wobei der Verbinder
• einen Grundkörper (4) mit einem Aufnahmeraum (5) zur Aufnahme des Kopfes (2) aufweist,
• eine von dem Grundkörper (4) gehaltene Haltefeder (6) vorgesehen ist, die eine als Halteposition bezeichnete Relativlage relativ zum Grundkörper (4) hat und die in dieser Halteposition einen in den Aufnahmeraum (5) ragenden Vorsprung (7) aufweist, wobei der Vorsprung (7) in der Halteposition in eine Löserichtung (9) bewegt werden kann und nach einer Bewegung von der Halteposition in die Löserichtung (9) weniger weit in den Aufnahmeraum (5) ragt, als in der Halteposition, wobei ein Bewegen des Vorsprungs (7) von der Halteposition in die Löserichtung (9) die Haltefeder (6) spannt,
**dadurch gekennzeichnet, dass**
• der Grundkörper (4), wenn sich die Haltefeder (6) in der Halteposition befindet, relativ zu der Haltefeder (6) entlang einer Verriegelungsrichtung (8) bewegt werden kann, wobei die Haltefeder (6) bei einer solchen Bewegung des Grundkörpers (4) in die Verriegelungsrichtung (8) aus der Halteposition in eine als Verriegelungsposition bezeichnete Relativlage relativ zum Grundkörper (4) überführt wird,
und
• die Haltefeder (6) einen außenliegenden Kontaktpunkt (10) oder eine außenliegende Kontaktfläche (10) aufweist und der Grundkörper (4) eine Gegenfläche (11) aufweist, wobei in der Verriegelungsposition der außenliegende Kontaktpunkt (10), bzw. die außenliegende Kontaktfläche (10) in Kontakt mit der Gegenfläche (11) des Grundkörpers (4) ist oder in der Verriegelungsposition der außenliegende Kontaktpunkt (10), bzw. die außenliegende Kontaktfläche (10) in Kontakt mit der Gegenfläche (11) des Grundkörpers (4) kommt, wenn der Vorsprung (7) in der Verriegelungsposition in Löserichtung (9) bewegt wird, wobei
• ein dem Inneren des Aufnahmeraums (5) zugewandter Oberflächenabschnitt der Haltefeder (6) über eine Kante in einen ebenen Oberflächenabschnitt übergeht, der senkrecht zur Verriegelungsrichtung (8) verläuft und derart ausgestaltet ist, dass er als Anschlagfläche dient, die in Anlage zu einer Anschlagfläche des Grundkörpers (4) gebracht werden kann, um die Bewegung der Haltefeder (6) zu begrenzen.

5. Verbinder nach Anspruch 4, **dadurch gekennzeichnet, dass** die Anschlagfläche des Grundkörpers (4) durch eine Fläche gebildet ist, die ein Fenster im Grundkörper (4) begrenzt, durch das der Vorsprung (7) der Haltefeder (6) in das Innere des Aufnahmeraums (5) ragt.

6. Verbinder nach Anspruch 4 oder 5, **dadurch gekennzeichnet, dass** die außenliegende Kontaktfläche (10), bzw. der außenliegende Kontaktpunkt (10) in der Halteposition mit der Gegenfläche (11) des Grundkörpers (4), die im Winkel zur Verriegelungsrichtung (8) steht, in Kontakt ist oder beabstandet zu der Gegenfläche (11) des Grundkörpers (4) angeordnet ist, aber in Kontakt mit der Gegenfläche (11) des Grundkörpers (4) kommt, wenn der Grundkörper (4) bei in der Halteposition befindlichen Haltefeder (6) in die Verriegelungsrichtung (8) bewegt wird und der in Kontakt mit der Gegenfläche (11) des Grundkörpers (4) befindliche Kontaktpunkt (10), bzw. die in Kontakt mit der Gegenfläche (11) des Grundkörpers (4) befindliche Kontaktfläche (10) entlang der Gegenfläche (11) gleitet, wenn der Grundkörper (4) in Richtung der Verriegelungsrichtung (8) bewegt wird.

7. Verbinder nach einem der Ansprüche 1 bis 6, **dadurch gekennzeichnet, dass** die Haltefeder (6) einen zweiten Vorsprung aufweist, der in der Halteposition in den Aufnahmeraum (5) ragt und der dem ersten Vorsprung (7) gegenüberliegend angeordnet ist.

8. Verbinder nach Anspruch 7, **dadurch gekennzeichnet, dass** der zweite Vorsprung und der erste Vorsprung (7) unter Spreizen der Haltefeder (6) von einander fort bewegt werden können.

9. Verbinder nach einem der Ansprüche 1 bis 8, **dadurch gekennzeichnet, dass** der Vorsprung (7) ein in dem Grundkörper (4) vorgesehenes Fenster durchgreift.

10. Verbinder nach einem der Ansprüche 1 bis 9, **dadurch gekennzeichnet, dass** der Vorsprung (7) einen dem Inneren des Aufnahmeraums (5) zugewandten konkaven Oberflächenabschnitt aufweist oder einen dem Inneren des Aufnahmeraums (5) zugewandte, im Winkel von >0° und <90° zur Verriegelungsrichtung (8) verlaufende ebenen Oberflächenabschnitt aufweist.

11. Verbinder zum Verbinden eines ersten Bauteils an einem einen Kopf (2) aufweisenden Raststift (3) eines zweiten Bauteils, wobei der Verbinder (1)
• einen Grundkörper (4) mit einem Aufnahmeraum (5) zur Aufnahme des Kopfes (2) aufweist, wobei der Grundkörper (4) eine das Äußere des Grundkörpers (4) mit dem Aufnahmeraum (5) verbindende Öffnung (12) aufweist, durch die der Kopf (2) von außerhalb des Grundkörpers (4) entlang einer Einschubsrichtung in den Grundkörper (4) geschoben werden kann,
• eine von dem Grundkörper (4) gehaltene Haltefeder (6) vorgesehen ist, die eine als Halteposition bezeichnete Relativlage relativ zum Grundkörper (4) hat und in dieser Halteposition einen in den Aufnahmeraum (5) ragenden Vorsprung (7) aufweist,
**dadurch gekennzeichnet, dass**
• der Vorsprung (7) einen dem Inneren des Aufnahmeraums (5) zugewandten konkaven Oberflächenabschnitt aufweist oder einen dem Inneren des Aufnahmeraums (5) zugewandten, im Winkel von >0° und <90° zur Einschubsrichtung verlaufenden ebenen Oberflächenabschnitt aufweist, wobei
der dem Inneren des Aufnahmeraums (5) zugewandte Oberflächenabschnitt der Haltefeder (6) über eine Kante in einen ebenen Oberflächenabschnitt übergeht, der senkrecht zur Verriegelungsrichtung (8) verläuft und derart ausgestaltet ist, dass er als Anschlagfläche dient, die in Anlage zu einer Anschlagfläche des Grundkörpers (4) gebracht werden kann, um die Bewegung der Haltefeder (6) zu begrenzen.

12. Verbinder nach Anspruch 11, **dadurch gekennzeichnet, dass** die Anschlagfläche des Grundkörpers (4) durch eine Fläche gebildet ist, die ein Fenster im Grundkörper (4) begrenzt, durch das der Vorsprung (7) der Haltefeder (6) in das Innere des Aufnahmeraums (5) ragt.

13. System aus einem Verbinder (1) nach einem der Ansprüche 1 bis 12 und einem einen Kopf (2) aufweisenden Raststift (3) eines zweiten Bauteils.

14. System nach Anspruch 13, **dadurch gekennzeichnet, dass** der Raststift (3), wenn sich der Kopf (2) in dem Aufnahmeraum (5) des Verbinders (1) befindet, einen dem Vorsprung (7) zugewandten Oberflächenabschnitt aufweist, der konvex ausgebildet ist oder der im Winkel von >0° und <90° zur Verriegelungsrichtung (8) verläuft.

15. Verfahren zum Verbinden eines ersten Bauteils an einem einen Kopf (2) aufweisenden Raststift (3) eines zweiten Bauteils, mit einem System nach einem der Ansprüche 13 oder 14, **dadurch gekennzeichnet, dass** der Kopf (2) des Raststifts (3) in den Aufnahmeraum (5) des Verbinders (1) bewegt wird.

16. Verwendung des Verbinders nach einem der Ansprüche 1 bis 12 zum Verbinden eines Halters, z.B. für einen Schlauch an einem Rahmenteil eines Automobils oder zum Verbinden eines Teppichs mit einer Bodenfläche eines Automobils oder zum Verbinden eines Panels, beispielsweise eines Teils eines Armaturenbretts mit einem Rahmenteil eines Automobils, oder zum Befestigen einer Hutablage oder von Verkleidungsteilen, wie z.B. einer Türverkleidung.

## Claims

1. Connector (1) for connecting a first component to a latching pin (3) of a second component, said latching pin having a head (2), wherein the connector
• has a base body (4) with a receiving space (5) for receiving the head (2),
• a retaining spring (6) is provided, which is held by the base body (4) and has a relative position, which is referred to as a holding position, relative to the base body (4) and which in this holding position has a projection (7) protruding into the receiving space (5), wherein the projection (7) in the holding position can be moved in a release direction (9) and protrudes a little less into the receiving space (5) than in the holding position after being moved from the holding position in the release direction (9), wherein a movement of the projection (7) from the holding position in the release direction (9) tensions the retaining spring (6),
**characterised in that**
• the base body (4) can be moved along a locking direction (8) relative to the retaining spring (6), if the retaining spring (6) is in the holding position, wherein, when the base body (4) is moved in the locking direction (8) in such a manner, the retaining spring (6) is transferred from the holding position into a relative position, which is referred to as the locking position, relative to the base body (4)
and
• the base body (4) has an inner contact point (10) or an inner contact surface (10) and the retaining spring (6) has a mating surface (11), wherein in the locking position the inner contact point (10) or the inner contact surface (10) contacts the mating surface (11) of the retaining spring (6) or in the locking position the inner contact point (10) or the inner contact surface (10) contacts the mating surface (11) of the retaining spring (6), if the projection (7) in the locking position is moved in the release direction (9), wherein
• a surface portion of the retaining spring (6), which faces the inside of the receiving space (5), passes over an edge into a flat surface portion, which extends vertically to the locking position (8) and is designed so that it serves as a locating surface which can be brought into abutment with a locating surface of the base body (4) in order to limit the movement of the retaining spring (6).

2. Connector according to Claim 1, **characterised in that** the locating surface of the base body (4) is formed by a surface which borders a window in the base body (4), through which the projection (7) of the retaining spring (6) protrudes into the inside of the receiving space (5).

3. Connector according to Claim 1 or 2, **characterised in that** the inner contact point (10) or an inner contact surface (10) in the holding position is in contact with the mating surface (11) of the retaining spring (6), which is positioned at an angle to the locking direction (8), or is arranged spaced apart the mating surface (11) of the retaining spring (6), however comes into contact with the mating surface (11) of the retaining spring (6) if the base body (4) next to the retaining spring (6), which is in the holding position, is moved in the locking direction (8) and the contact point (10), which is in contact with the mating surface (11) of the retaining spring (6), or the contact surface point (10), which is in contact with the mating surface (11) of the retaining spring (6), slides along the mating surface (11) if the base body (4) is moved in the direction of the locking direction (8).

4. Connector for connecting a first component to a latching pin (3) of a second component, said latching pin having a head (2), wherein the connector
• has a base body (4) with a receiving space (5) for receiving the head (2),
• a retaining spring (6) is provided, which is held by the base body (4) and has a relative position, which is referred to as a holding position, relative to the base body (4) and which in this holding position has a projection (7) protruding into the receiving space (5), wherein the projection (7) in the holding position can be moved in a release direction (9) and protrudes a little less into the receiving space (5) than in the holding position after being moved from the holding position in the release direction (9), wherein a movement of the projection (7) from the holding position in the release direction (9) tensions the retaining spring (6),
**characterised in that**
• the base body (4) can be moved along a locking direction (8) relative to the retaining spring (6), if the retaining spring (6) is in the holding position, wherein, when the base body (4) is moved in the locking direction (8) in such a manner, the retaining spring (6) is transferred from the holding position into a relative position, which is referred to as the locking position, relative to the base body (4)
and
• the retaining spring (6) has an outer contact point (10) or an outer contact surface (10) and the base body (4) has a mating surface (11), wherein in the locking position the outer contact point (10) or the outer contact surface (10) contacts the mating surface (11) of the base body (4) or in the locking position the outer contact point (10) or the outer contact surface (10) contacts the mating surface (11) of the base body (4) if the projection (7) in the locking position is moved in the release direction (9), wherein
• a surface portion of the retaining spring (6) which faces the inside of the receiving space (5) passes over an edge into a flat surface portion, which extends vertically to the locking position (8) and is designed so that it serves as a locating surface which can be brought into abutment with a locating surface of the base body (4) in order to limit the movement of the retaining spring (6).

5. Connector according to Claim 4, **characterised in that** the locating surface of the base body (4) is formed by a surface which borders a window in the base body (4), through which the projection (7) of the retaining spring (6) protrudes into the inside of the receiving space (5).

6. Connector according to Claim 4 or 5, **characterised in that** the outer contact surface (10) or the outer contact point (10) in the holding position is in contact with the mating surface (11) of the base body (4), which is positioned at an angle to the locking direction (8), or is arranged spaced apart the mating surface (11) of the base body (4), however comes into contact with the mating surface (11) of the base body (4) if the base body (4) next to the retaining spring (6), which is in the holding position, is moved in the locking direction (8) and the contact point (10), which is in contact with the mating surface (11) of the base body (4), or the contact surface point (10), which is in contact with the mating surface (11) of the base body (4), slides along the mating surface (11) if the base body (4) is moved in the direction of the locking direction (8).

7. Connector according to one of Claims 1 to 6, **characterised in that** the retaining spring (6) has a second projection, which in the holding position protrudes into the receiving space (5) and which is arranged opposite the first projection (7).

8. Connector according to Claim 7, **characterised in that** the second projection and the first projection (7) can be moved apart from each other by spreading the retaining spring (6).

9. Connector according to one of Claims 1 to 8, **characterised in that** the projection (7) passes through a window provided in the base body (4).

10. Connector according to one of Claims 1 to 9, **characterised in that** the projection (7) has a concave surface portion which faces the inside of the receiving space (5), or has a fait surface portion which faces the inside of the receiving space (5) and extends at an angle of >0° and <90° to the locking direction (8).

11. Connector for connecting a first component to a latching pin (3) of a second component, said latching pin having a head (2), wherein the connector has (1)
• a base body (4) with a receiving space (5) for receiving the head (2), wherein the base body (4) has an opening (12) connecting the outside of the base body (4) with the receiving space (5), through which the head (2) can be pushed into the base body (4) from outside the base body (4) along an insertion direction,
• which is provided with a retaining spring (6), which is held by the base body (4) and has a relative position, which is referred to as a holding position, relative to the base body (4) and which has a projection (7) that protrudes into the receiving space (5) in this holding position, **characterised in that**
• the projection (7) has a convex surface portion which faces the inside of the receiving space (5) or has a flat surface portion, which faces the inside of the receiving space (5) and extends at an angle of >0° and <90° to the insertion direction, wherein the surface portion of the retaining spring (6) which faces the inside of the receiving space (5) passes over an edge into a flat surface portion, which extends vertically to the locking position (8) and is designed so that it serves as a locating surface, which can be brought into abutment with a locating surface of the base body (4) in order to limit the movement of the retaining spring (6).

12. Connector according to Claim 11, **characterised in that** the locating surface of the base body (4) is formed by a surface which borders a window in the base body (4), through which the projection (7) of the retaining spring (6) protrudes into the inside of the receiving space (5).

13. System comprising a connector (1) according to one of Claims 1 to 12 and a latching pin (3) of a second component, said latching pin having a head (2).

14. System according to Claim 13, **characterised in that** if the head (2) is located in the receiving space (5) of the cylinder (1), the latching pin (3) has a surface portion, which faces the projection (7), which has a convex shape or extends at an angle of >0° and <90° to the locking direction (8).

15. Method for connecting a first component to a latching pin (3) of a second component, said latching pin having a head (2), with a system according to one of Claims 13 or 14, **characterised in that** the head (2) of the latching pin (3) is moved into the receiving area (5) of the connector (1).

16. Use of the connector according to one of Claims 1 to 12 for connecting a retainer, e.g. for a hose on a frame section of a motor vehicle or for connecting a carpet to a floor area of a motor vehicle or for connecting a panel, for example a section of an instrument panel to a frame section of a motor vehicle, or for attaching a parcel shelf or trim components, such as a door trim.

## Revendications

1. Connecteur (1) pour relier un premier composant à une tige d'encliquetage (3) contenant une tête (2) d'un second composant, le connecteur contenant
• un corps de base (4) doté d'un espace de réception (5) pour le logement de la tête (2),
• un ressort de retenue (6) tenu par le corps de base (4) étant prévu qui a une position relative **caractérisée** comme une position de retenue par rapport au corps de base (4) et qui contient, dans cette position de retenue, une saillie (7) dans l'espace de réception (5), ladite saillie (7) dans la position de retenue pouvant être déplacée dans un sens du desserrage (9) et après un déplacement de la position de retenue dans le sens du desserrage (9) dépasse moins dans l'espace de réception (5) que dans la position de retenue, le déplacement de la saillie (7) de la position de retenue dans le sens du desserrage (9) tendant le ressort de retenue (6),
**caractérisé en ce que**
• le corps de base (4) peut être déplacé par rapport au ressort de retenue (6) le long d'une direction de verrouillage (8) si le ressort de retenue (6) se trouve en position de retenue, le ressort de retenue (6) lors d'un tel déplacement du corps de base (4) dans la direction de verrouillage (8) étant transféré de la position de retenue dans une position relative **caractérisée** comme une position de verrouillage par rapport au corps de base (4)
et
• le corps de base (4) comporte un point de contact interne (10) ou une surface de contact interne (10) et le ressort de retenue (6) comporte une contre-surface (11), dans la position de verrouillage le point de contact interne (10) ou la surface de contact interne (10) est en contact avec la contre-surface (11) du ressort de retenue (6) ou dans la position de verrouillage le point de contact interne (10) ou la surface de contact interne (10) vient en contact avec la contre-surface (11) du ressort de retenue (6), lorsque la saillie (7) est déplacée dans le sens du desserrage (9),
• une section de surface du ressort de retenue (6) tournée vers l'intérieur de l'espace de réception (5) devient, par l'intermédiaire d'un bord, une section de surface plane qui s'étend perpendiculairement à la direction de verrouillage (8) et qui est conçue de telle sorte qu'elle sert de surface de butée qui peut être amenée en appui contre une surface de butée du corps de base (4) afin de limiter le mouvement du ressort de retenue (6).

2. Connecteur selon la revendication 1, **caractérisé en ce que** la surface de butée du corps de base (4) est formée par une surface qui délimite une fenêtre dans le corps de base (4), à travers laquelle la saillie (7) du ressort de retenue (6) fait saillie à l'intérieur de l'espace de réception (5).

3. Connecteur selon la revendication 1 ou 2, **caractérisé en ce que** le point de contact interne (10), ou la surface de contact interne (10), dans la position de retenue, est en contact avec la contre-surface (11) du ressort de retenue (6), qui forme un angle avec la direction de verrouillage (8), ou est disposé à distance de la contre-surface (11) du ressort de retenue (6), mais vient en contact avec la contre-surface (11) du ressort de retenue (6), lorsque le corps de base (4) est déplacé dans la direction de verrouillage (8) alors que le ressort de retenue (6) se trouve dans la position de retenue et que le point de contact (10) se trouvant en contact avec la contre-surface (11) du ressort de retenue (6), ou la surface de contact (10) se trouvant en contact avec la contre-surface (11) du ressort de retenue (6), glisse le long de la contre-surface (11) lorsque le corps de base (4) est déplacé dans la direction de verrouillage (8).

4. Connecteur pour relier un premier composant à une tige d'encliquetage (3) comportant une tête (2) d'un second composant, le connecteur contenant
• un corps de base (4) doté d'un espace de réception (5) pour le logement de la tête (2),
• un ressort de retenue (6) tenu par le corps de base (4) étant prévu qui a une position relative **caractérisée** comme une position de retenue par rapport au corps de base (4) et qui contient, dans cette position de retenue, une saillie (7) dans l'espace de réception (5), ladite saillie (7) dans la position de retenue pouvant être déplacée dans un sens du desserrage (9) et après un déplacement de la position de retenue dans le sens du desserrage (9) dépasse moins dans l'espace de réception (5) que dans la position de retenue, le déplacement de la saillie (7) de la position de retenue dans le sens du desserrage (9) tendant le ressort de retenue (6),
**caractérisé en ce que**
• le corps de base (4) peut être déplacé par rapport au ressort de retenue (6) le long d'une direction de verrouillage (8) si le ressort de retenue (6) se trouve en position de retenue, le ressort de retenue (6) lors d'un tel déplacement du corps de base (4) dans la direction de verrouillage (8) étant transféré de la position de retenue dans une position relative **caractérisée** comme une position de verrouillage par rapport au corps de base (4)
et
• le ressort de retenue (6) comporte un point de contact externe (10) ou une surface de contact externe (10) et le corps de base (4) comporte une contre-surface (11), dans la position de verrouillage, le point de contact externe (10) ou la surface de contact externe (10) étant en contact avec la contre-surface (11) du corps de base (4) ou dans la position de verrouillage du point de contact externe (10) ou
la surface de contact externe (10) venant en contact avec la contre-surface (11) du corps de base (4) lorsque la saillie (7) est déplacée dans le sens du desserrage (9) dans la position de verrouillage,
• une section de surface du ressort de retenue (6) tournée vers l'intérieur de l'espace de réception (5) devenant, par l'intermédiaire d'un bord, une section de surface plane qui s'étend perpendiculairement à la direction de verrouillage (8) et qui est conçue de telle sorte qu'elle sert de surface de butée qui peut être amenée en appui contre une surface de butée du corps de base (4) afin de limiter le mouvement du ressort de retenue (6).

5. Connecteur selon la revendication 4, **caractérisé en ce que** la surface de butée du corps de base (4) est formée par une surface qui délimite une fenêtre dans le corps de base (4), à travers laquelle la saillie (7) du ressort de retenue (6) fait saillie à l'intérieur de l'espace de réception (5).

6. Connecteur selon la revendication 4 ou 5, **caractérisé en ce que** la surface de contact externe (10) ou le point de contact externe (10), dans la position de retenue, est en contact avec la contre-surface (11) du corps de base (4), qui forme un angle avec la direction de verrouillage (8), ou est disposé à distance de la contre-surface (11) du corps de base (4), mais vient en contact avec la contre-surface (11) du corps de base (4), lorsque le corps de base (4) est déplacé dans la direction de verrouillage (8) alors que le ressort de retenue (6) se trouve dans la position de retenue et que le point de contact (10) se trouvant en contact avec la contre-surface (11) du corps de base (4), ou la surface de contact (10) se trouvant en contact avec la contre-surface (11) du corps de base (4), glisse le long de la contre-surface (11) lorsque le corps de base (4) est déplacé dans la direction de verrouillage (8).

7. Connecteur selon l'une des revendications 1 à 6, **caractérisé en ce que** le ressort de retenue (6) comporte une seconde saillie qui, dans la position de retenue, fait saillie dans l'espace de réception (5) et qui est disposée en face de la première saillie (7).

8. Connecteur selon la revendication 7, **caractérisé en ce que** la seconde saillie et la première saillie (7) peuvent être éloignées l'une de l'autre en écartant le ressort de retenue (6).

9. Connecteur selon l'une des revendications 1 à 8, **caractérisé en ce que** la saillie (7) traverse une fenêtre prévue dans le corps de base (4).

10. Connecteur selon l'une des revendications 1 à 9, **caractérisé en ce que** la saillie (7) comporte une section de surface concave tournée vers l'intérieur de l'espace de réception (5) ou comporte une section de surface plane tournée vers l'intérieur de l'espace de réception (5) et s'étendant selon un angle >0° et <90° par rapport à la direction de verrouillage (8).

11. Connecteur pour relier un premier composant à une tige d'encliquetage (3) comportant une tête (2) d'un second composant, le connecteur (1) comportant
- un corps de base (4) avec un espace de réception (5) pour le logement de la tête (2), le corps de base (4) comportant une ouverture (12) reliant l'extérieur du corps de base (4) à l'espace de réception (5), à travers laquelle la tête (2) peut être poussée dans le corps de base (4) depuis l'extérieur du corps de base (4) le long d'une direction d'insertion,
• un ressort de retenue (6) est prévu maintenu par le corps de base (4), qui a une position relative **caractérisée** comme une position de retenue, par rapport au corps de base (4) et qui contient dans cette position de retenue une saillie (7) faisant saillie dans l'espace de réception (5), **caractérisé en ce que**
• la saillie (7) comporte une section de surface concave tournée vers l'intérieur de l'espace de réception (5) ou comporte une section de surface plane tournée vers l'intérieur de l'espace de réception (5) et s'étendant sous un angle de >0° et <90° par rapport à la direction d'insertion, la section de surface du ressort de retenue (6) tournée vers l'intérieur de l'espace de réception (5) devenant, par l'intermédiaire d'un bord, une section de surface plane qui s'étend perpendiculairement à la direction de verrouillage (8) et qui est conçue de telle sorte qu'elle sert de surface de butée qui peut être amenée en appui contre une surface de butée du corps de base (4) afin de limiter le mouvement du ressort de retenue (6).

12. Connecteur selon la revendication 11, **caractérisé en ce que** la surface de butée du corps de base (4) est formée par une surface qui délimite une fenêtre dans le corps de base (4), à travers laquelle la saillie (7) du ressort de retenue (6) fait saillie à l'intérieur de l'espace de réception (5).

13. Système composé d'un connecteur (1) selon l'une des revendications 1 à 12 et d'une tige d'encliquetage (3) comportant une tête (2) d'un second composant.

14. Système selon la revendication 13, **caractérisé en ce que**, lorsque la tête (2) se trouve dans l'espace de réception (5) du connecteur (1), la tige d'encliquetage (3) comporte une section de surface tournée vers la saillie (7) qui est convexe ou qui forme un angle de >0° et <90° par rapport à la direction de verrouillage (8).

15. Procédé pour relier un premier composant à une tige d'encliquetage (3), comportant une tête (2) d'un second composant, avec un système selon l'une des revendications 13
ou 14, **caractérisé en ce que** la tête (2) de la tige d'encliquetage (3) est déplacée dans l'espace de réception (5) du connecteur (1).

16. Utilisation du connecteur selon l'une des revendications 1 à 12 pour relier un support, par exemple pour un tuyau flexible, à une partie de cadre d'une automobile, ou pour relier un tapis à une surface de plancher d'une automobile, ou pour relier un panneau, par exemple une partie d'un tableau de bord, à une partie de cadre d'une automobile, ou pour fixer une plage arrière ou des éléments d'habillage, tels qu'un habillage de porte.
